# EUROPEAN PATENT APPLICATION

(11) **EP 4 815 236 A1**
(43) Date of publication of application: **30.09.2026**
(21) Application number: 26167539.1
(22) Date of filing: 25.03.2026
(51) Int. Cl.: H02J 1/02, H02J 1/002, H02M 3/24

(54) **POWER SYSTEM**

(30) Priority: 25.03.2025 US 202563777273 P
(71) Applicant: DELTA ELECTRONICS, INC., 11491 Taipei (TW)
(72) Inventor: Zhang, Chi, Morrisville, NC, 27560 (US); Wang, Ruxi, Morrisville, NC, 27560 (US); Barbosa, Peter Mantovanelli, 320023 Taoyuan City (TW)
(74) Representative: Uexküll & Stolberg

(57) **Abstract**

A power system (1) is provided. The power system (1) includes an AC-DC conversion module (11), a server board (12), a DC-DC converter (13), and a load (14). The AC-DC conversion module (11) is configured to convert an AC voltage (Vac1) to an intermediate DC voltage (Vdc1) which is greater than or equal to 100 V. The DC-DC converter (13) is disposed on the server board (12), electrically connected to the AC-DC conversion module (11) to receive the intermediate DC voltage (Vdc1), and configured to convert the intermediate DC voltage (Vdc1) to a load voltage (Vdc2). The DC-DC converter (13) includes submodules (131 to 13N) and a controller (130), input terminals of the submodules (131 to 13N) are electrically connected in series, output terminals of the submodules (131 to 13N) are electrically connected in parallel, and the controller (130) controls operation of the submodules (131 to 13N). The load (14) is disposed on the server board (12) and is electrically connected to the DC-DC converter (13) to receive the load voltage (Vdc2). The load (14) is configured to be powered by the load voltage (Vdc2).

## Description

### FIELD OF THE INVENTION

The present disclosure relates to a power system, and more particularly to a power system with single DC-DC conversion stage.

### BACKGROUND OF THE INVENTION

Nowadays, data centers and other related servers require more and more power, driven by the growth of artificial intelligence (AI) and other factors. The power usually comes from a local substation where the output voltage of the power substation is tens of kilovolts AC. High voltage is generally preferred for large power transmission to save the conduction loss on the wire. However, the powerful chips on the server board only need a few volts DC or even below one volt. Therefore, a high-step-down power supply system is required to convert the tens of kilovolts AC from the substation to the low-voltage DC required by the load on the server board.

Conventionally, the power may be gradually stepped down through multiple conversion stages. For example, first, the tens of kilovolts AC may be converted into a low-voltage AC (e.g., 480 V) by an AC line transformer. Then, the low-voltage AC is converted into a first intermediate DC voltage (e.g., 800 V) by an AC-DC conversion stage. Afterwards, the first intermediate DC voltage is stepped down to a smaller second intermediate DC voltage (e.g., 48 V) by a first DC-DC conversion stage. Finally, the second intermediate DC voltage is stepped down to a voltage that the load requires by a second DC-DC conversion stage. Consequently, from the substation to the load, an AC line transformer, a AC-DC conversion stage, and two DC-DC conversion stages are used for power conversion, and thus the large number of conversion stages would reduce the overall efficiency

Therefore, there is a need of providing a power system in order to overcome the drawbacks of the conventional technologies.

### SUMMARY OF THE INVENTION

The present disclosure provides a power system, which includes single DC-DC conversion stage in the power conversion between the power source and the load, thereby reducing the number of conversion stages and increasing the overall efficiency. Further, in the power system, the DC-DC conversion stage and the load are disposed on the same board so that the conduction loss from the output of the DC-DC conversion stage to the load is minimized.

In accordance with an aspect of the present disclosure, a power system is provided. The power system includes an AC-DC conversion module, a server board, a DC-DC converter, and a load. The AC-DC conversion module is configured to convert an AC voltage to an intermediate DC voltage, and the intermediate DC voltage is greater than or equal to 100 V. The DC-DC converter is disposed on the server board, electrically connected to the AC-DC conversion module to receive the intermediate DC voltage, and configured to convert the intermediate DC voltage to a load voltage. The DC-DC converter includes a plurality of submodules and a controller, input terminals of the plurality of submodules are electrically connected in series, output terminals of the plurality of submodules are electrically connected in parallel, and the controller is configured to control operation of the plurality of submodules. The load is disposed on the server board and is electrically connected to the DC-DC converter to receive the load voltage. The load is configured to be powered by the load voltage.

### BRIEF DESCRIPTION OF THE DRAWINGS

FIG. 1 is a schematic block diagram illustrating a power system according to an embodiment of the present disclosure;
FIG. 2 is a schematic block diagram illustrating a power system according to another embodiment of the present disclosure;
FIG. 3 is a schematic block diagram illustrating the DC-DC converter of the power system according to an embodiment of the present disclosure;
FIG. 4 schematically shows an implementation of each submodule of the DC-DC converter in FIG. 3;
FIG. 5 schematically shows operating waveforms of the submodule of FIG. 4;
FIG. 6 schematically shows an implementation of two submodules of the DC-DC converter in FIG. 3;
FIG. 7 schematically shows operating waveforms of the two submodules of FIG. 6; and
FIG. 8 is a schematic block diagram illustrating the DC-DC converter of the power system according to another embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

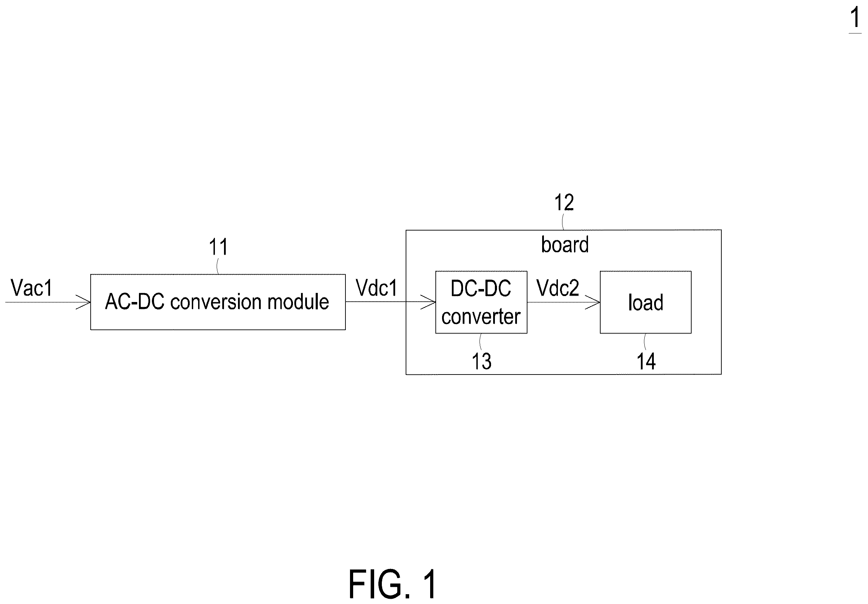

Refer to FIG. 1. FIG. 1 is a schematic block diagram illustrating a power system according to an embodiment of the present disclosure. As shown in FIG. 1, the power system 1 includes an AC-DC conversion module 11, a board 12, a DC-DC converter 13, and a load 14. The AC-DC conversion module 11 is configured to converter an AC voltage Vac1 to an intermediate DC voltage Vdc1. In one embodiment, the board 12 may be a server board. The term "server board" is not limited to a traditional central processing motherboard. It encompasses any printed circuit board, substrate, or modular tray that physically hosts a computing load, including but not limited to GPU baseboards, accelerator modules, compute blades, mezzanine cards, and switch boards, or something similar. The power source that provides the AC voltage Vac1 is not limited in the present disclosure, in some embodiments, a DC source may be coupled to an inverter to provide the AC voltage Vac1, and the power source is for example but not limited to include a power grid, solar panels, hydrogen fuel cells, or nuclear power plants. In addition, the AC voltage Vac1 may be between 1 kV and 69 kV, but not exclusively. In an embodiment, the AC voltage Vac1 may be between 10 kV and 35 kV. The intermediate DC voltage Vdc1 may be greater than or equal to 100 V or 400 V, but not exclusively. In an embodiment, the intermediate DC voltage Vdc1 may be between 400 V and 1 kV.

The DC-DC converter 13 is disposed on the board 12 and is electrically connected to the AC-DC conversion module 11 to receive the intermediate DC voltage Vdc1. In an embodiment, the DC-DC converter 13 may be directly connected to the AC-DC conversion module 11. In one embodiment, the DC-DC converter 13 may be connected to the AC-DC conversion module 11 without an intervening power conversion stage. The DC-DC converter 13 is configured to convert the intermediate DC voltage Vdc1 to a load voltage Vdc2. The load 14 is also disposed on the board 12 and is electrically connected to the DC-DC converter 13 to receive the load voltage Vdc2. The load 14 is configured to be powered by the load voltage Vdc2. The magnitude of the load voltage Vdc2 depends on the voltage required by the load 14. For example, the load voltage Vdc2 may be between 0.1 V and 50 V, or may be between 0.5 V and 12V, but not limited thereto. In an embodiment, the load 14 includes a graphics processing unit (GPU), and corresponding, the load voltage Vdc2 may be between 0.5 V and 1 V. In another embodiment, the load voltage Vdc2 may be between 1 V and 12 V. In addition, in an embodiment, a conversion ratio of the DC-DC converter 13 is greater than ten.

Accordingly, in the power system 1, single DC-DC conversion stage (i.e., the DC-DC converter 13) is used in the power conversion between the AC voltage Vac1 and the load 14, the number of conversion stages is reduced compared with the conventional approach. Thereby, the overall efficiency is increased, the system cost is reduced, and the overall size may be reduced. Further, in the power system 1, since the DC-DC converter 13 and the load 14 are disposed on the same board 12, the conduction loss from the output of the DC-DC converter 13 to the load 14 is minimized.

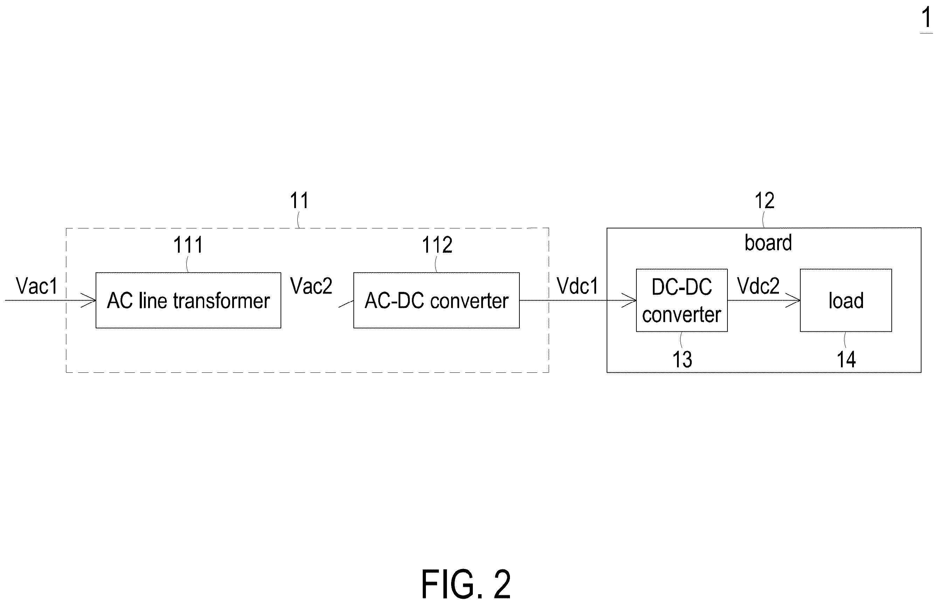

In an embodiment, the AC-DC conversion module 11 may be implemented by a solid-state transformer which converts the AC voltage Vac1 to the intermediate DC voltage Vdc1. In an embodiment, the solid-state transformer of the AC-DC conversion module 11 which may directly convert the AC voltage Vac1 to the intermediate DC voltage Vdc1 without an intervening power conversion stage. In another embodiment, as exemplified in FIG. 2, the AC-DC conversion module 11 may include an AC line transformer 111 and an AC-DC converter 112. The AC line transformer 111 is configured to convert the AC voltage Vac1 to an AC voltage Vac2, which is lower than the AC voltage Vac1. In an embodiment, the AC voltage Vac2 may be less than 1 kV. The AC-DC converter 112 is electrically connected to the AC line transformer 111, and is configured to convert the AC voltage Vac2 to the intermediate DC voltage Vdc1. For example, the AC-DC converter 112 may be a single-phase or three-phase converter. It is noted that the AC-DC converter 112 may be implemented by any suitable circuit topology having the capability for AC to DC conversion with the PFC (power factor correction) function.

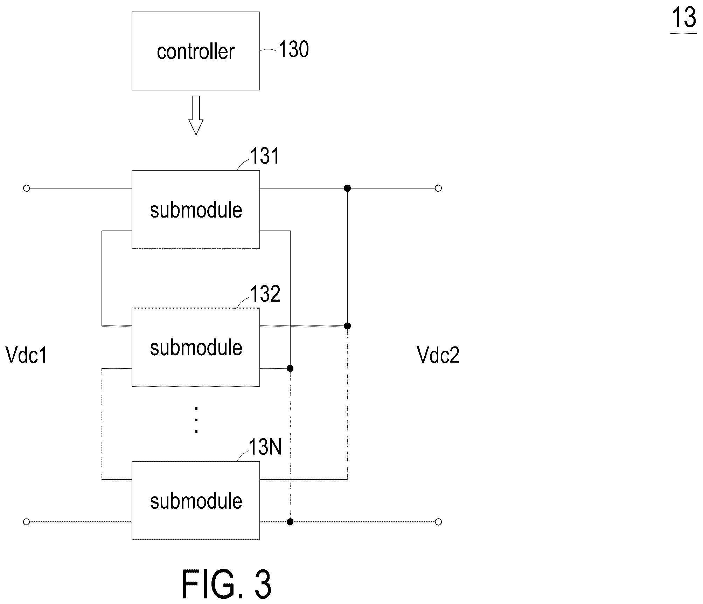

Refer to FIG. 3. FIG. 3 is a schematic block diagram illustrating the DC-DC converter of the power system according to an embodiment of the present disclosure. As shown in FIG. 3, in this embodiment, the DC-DC converter 13 includes a plurality of submodules 131, 132, ..., 13N, where N is an integer greater than one. Input terminals of the submodules 131 to 13N are electrically connected in series to block the high input DC voltage (i.e., the intermediate DC voltage Vdc1), and output terminals of the submodules 131 to 13N are electrically connected in parallel to collaboratively provide the required current to the load 14. In an embodiment, the DC-DC converter 13 further includes a controller 130 configured to control operation of the plurality of submodules 131 to 13N. In an embodiment, each of the plurality of submodules 131 to 13N is configured to provide galvanic isolation from the intermediate DC voltage Vdc1 to the load voltage Vdc2.

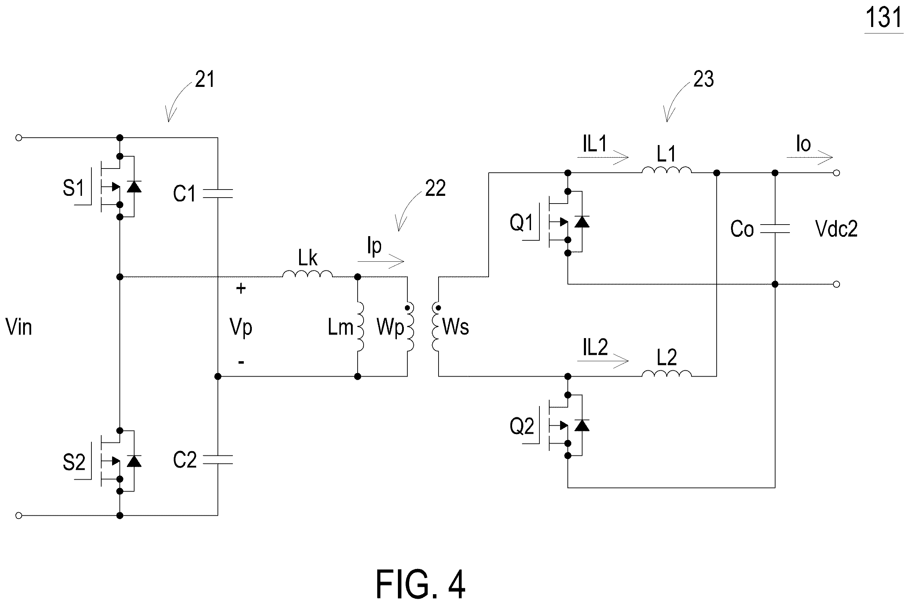

Refer to FIG. 4. FIG. 4 schematically shows an implementation of each submodule of the DC-DC converter in FIG. 3. For the sake of clarity, the submodule 131 is taken as an example in FIG. 4. As shown in FIG. 4, the submodule 131 includes a primary circuit 21, a transformer 22, and a secondary circuit 23. The primary circuit 21 is electrically to the input terminal of the submodule 131 and is configured to halve an input voltage Vin of the submodule 131. In this embodiment, the primary circuit 21 includes a switch bridge arm and a capacitor bridge arm electrically connected in parallel. The switch bridge arm includes two switches S1 and S2 electrically connected in series between positive and negative input terminals of the submodule 131. The capacitor bridge arm includes two capacitors C1 and C2 electrically connected in series between positive and negative input terminals of the submodule 131.

The transformer 22 includes a primary winding Wp and a secondary winding Ws electrically connected to the primary circuit 21 and the secondary circuit 23 respectively. In specific, a first terminal of the primary winding Wp is electrically connected to a connection point of the switches S1 and S2, and a second terminal of the primary winding Wp is electrically connected to a connection point of the capacitors C1 and C2. In an embodiment, the transformer 22 further includes a magnetizing inductance Lm and a leakage inductance Lk. The magnetizing inductance Lm is electrically connected in parallel to the primary winding Wp. The leakage inductance Lk is electrically connected between the first terminal of the primary winding Wp and the connection point of the switches S1 and S2.

The secondary circuit 23 is electrically connected between the transformer 22 and the load 14, and is configured to receive and double a current from the transformer 22 and provide it to the load 14. In this embodiment, the secondary circuit 23 includes two switch Q1 and Q2 and two inductors L1 and L2. The switch Q1 is electrically connected between a first terminal of the secondary winding Ws and a negative output terminal of the submodule 131. The switch Q2 is electrically connected between a second terminal of the secondary winding Ws and the negative output terminal of the submodule 131. The inductor L1 is electrically connected between the first terminal of the secondary winding Ws and a positive output terminal of the submodule 131. The inductor L2 is electrically connected between the second terminal of the secondary winding Ws and the positive output terminal of the submodule 131. In an embodiment, the secondary circuit 23 further includes an output capacitor Co, and the output capacitor Co is electrically between the positive and negative output terminals of the submodule 131 (i.e., electrically connected in parallel to the load 14).

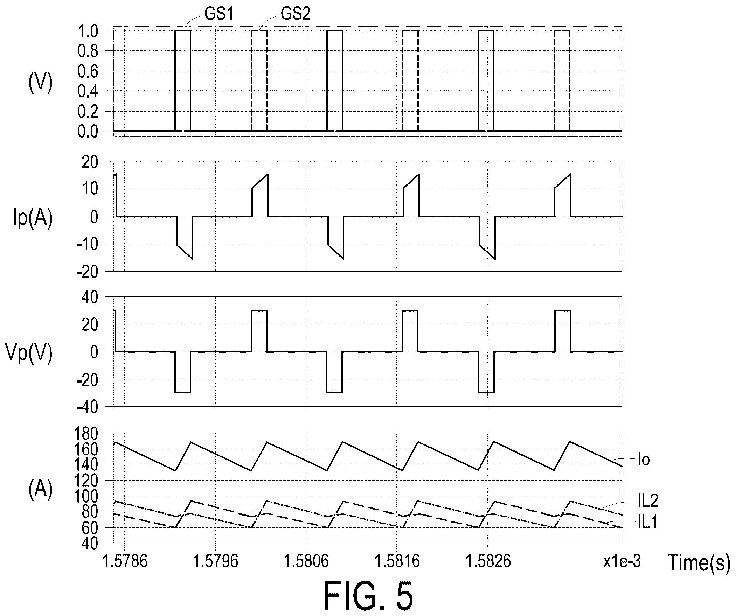

Refer to FIG. 5 in conjunction with FIG. 4. FIG. 5 schematically shows operating waveforms of the submodule of FIG. 4. In FIG. 5, GS1 represents a control signal of the switch S1, GS2 represents a control signal of the switch S2, Ip represents a primary current flowing through the primary winding Wp of the transformer 22, Vp represents a primary voltage of the transformer 22, IL1 represents an inductor current flowing through the inductor L1, IL2 represents an inductor current flowing through the inductor L2, and Io represents an output current provided by the submodule 131 to the load 14. Further, in FIG. 5, the control signal GS1 is depicted by solid lines, and the control signal GS2 is depicted by dashed lines; the inductor current IL1 is depicted by dashed lines, the inductor current IL2 is depicted by chain lines, and the output current Io is depicted by solid lines.

A shown in FIG. 5, the control signals GS1 and GS2 of the switches S1 and S2 have the same duty cycle and have a phase difference of 180 degrees, and the duty cycles may be used to control the output voltage and power. The output current Io is actually the sum of the inductor currents IL1 and IL2. Due to the phase difference of 180 degrees between the control signals GS1 and GS2, the ripple frequency of output current Io is twice the switching frequency of the switches S1 and S2.

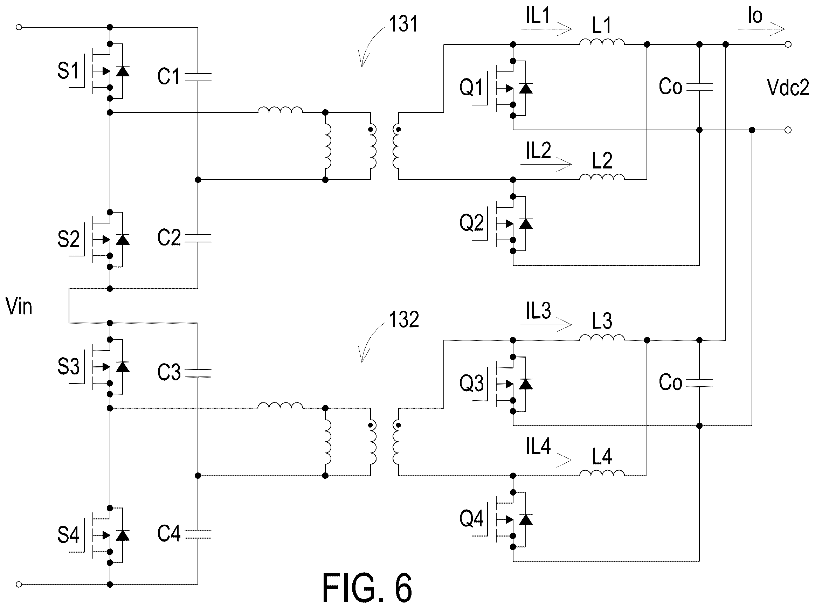

Refer to FIG. 6. FIG. 6 schematically shows an implementation of two submodules of the DC-DC converter in FIG. 3. In FIG. 6, the component parts and elements corresponding to those of FIG. 4 are designated by identical numeral references, and detailed descriptions thereof are omitted herein. As shown in FIG. 6, input terminals of the submodules 131 and 132 are electrically connected in series, and output terminals of the submodules 131 and 132 are electrically connected in parallel. The circuit topology and function of the submodule 132 are similar with that of the submodule 131, and thus detailed descriptions are omitted herein. Specifically, the submodule 132 includes switches S3, S4 and capacitors C3, C4 in the primary circuit and includes switches Q3, Q4 and inductors L3, L4 in the secondary circuit.

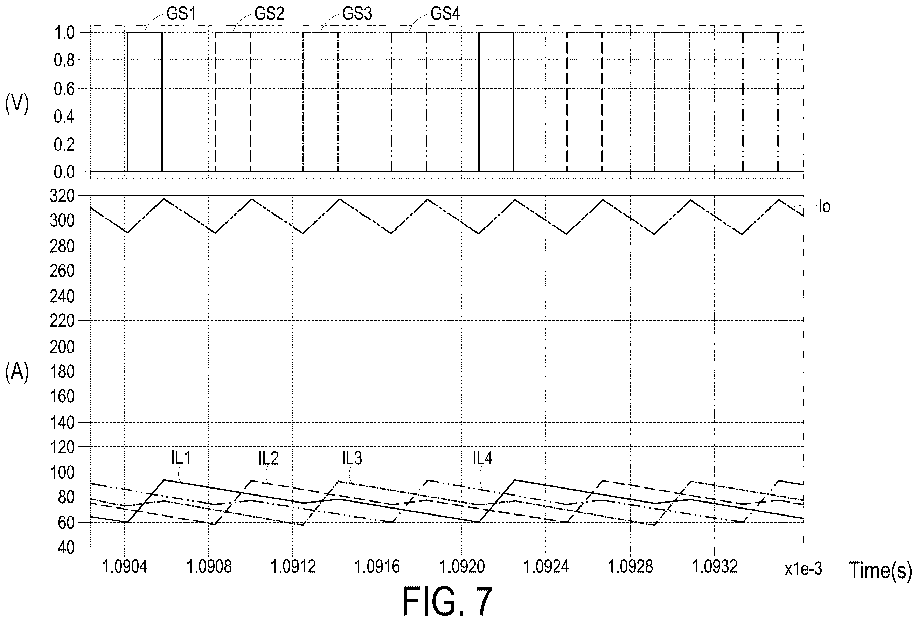

Refer to FIG. 7 in conjunction with FIG. 6. FIG. 7 schematically shows operating waveforms of the two submodules of FIG. 6. In FIG. 7, GS3 represents a control signal of the switch S3, GS4 represents a control signal of the switch S4, IL3 represents an inductor current flowing through the inductor L3, IL4 represents an inductor current flowing through the inductor L4, and Io represents an output current collaboratively provided by the two submodules 131 and 132 to the load 14. Further, in FIG. 7, the control signals GS1, GS2, GS3 and GS4 are depicted by different line types, and the inductor currents IL1, IL2, IL3 and IL4 and the output current Io are depicted by different line types. As shown in FIG. 7, the control signals GS1, GS2, GS3 and GS4 of the switches S1, S2, S3 and S4 all have the same duty cycle. The control signals GS1 and GS2 of the switches S1 and S2 have a phase difference of 90 degrees, the control signals GS2 and GS3 of the switches S2 and S3 have a phase difference of 90 degrees, and the control signals GS3 and GS4 of the switches S3 and S4 have a phase difference of 90 degrees. In other words, the switches S1, S2, S3 and S4 are operated in an interleaved manner. Due to the operation in the interleaved manner, the ripple frequency of output current Io is four times the switching frequency of each of the switches S1, S2, S3 and S4. Accordingly, it can be derived that, in an embodiment, control signals of 2N switches in primary circuits of the N submodules 131 to 13N sequentially have a phase difference of 180/N, and a ripple frequency of an output current collaboratively provided by the N submodules 131 to 13N to the load 14 is 2N times a switching frequency of each of the 2N switches in the primary circuits of the N submodules 131 to 13N.

It is noted that the possible circuit topologies and control methods of the submodules 131 to 13N of the DC-DC converter 13 are not limited to that exemplified in the above embodiment and may be determined and adjusted according to actual requirements.

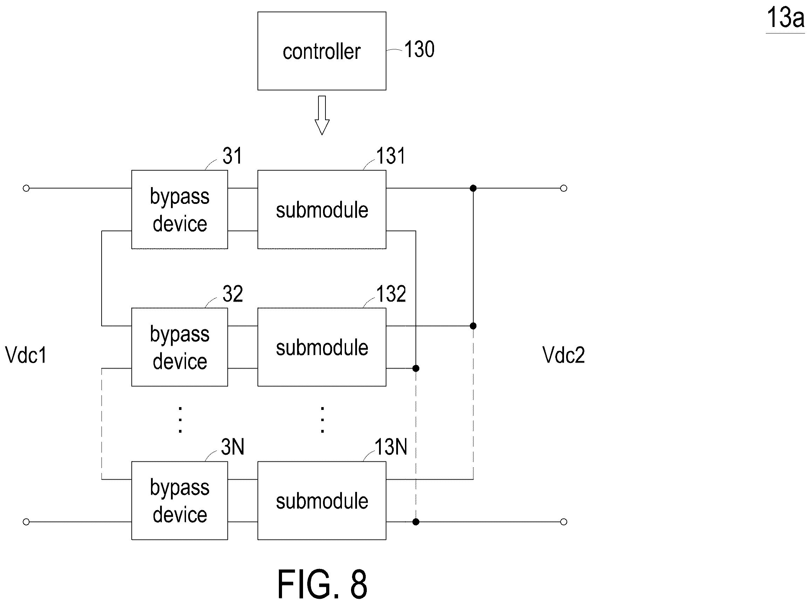

Refer to FIG. 8. FIG. 8 is a schematic block diagram illustrating the DC-DC converter of the power system according to another embodiment of the present disclosure. In FIG. 8, the component parts and elements corresponding to those of FIG. 3 are designated by identical numeral references, and detailed descriptions thereof are omitted herein. As shown in FIG. 8, in this embodiment, the DC-DC converter 13a further includes a plurality of bypass devices 31, 32, ..., 3N, namely the number of the bypass devices 31 to 3N is equal to the number of the submodules 131 to 13N. The plurality of bypass devices 31 to 3N are electrically connected to the input terminals of the plurality of submodules 131 to 13N respectively. Each of the plurality of bypass devices 31 to 3N is controlled by the controller 130 and is configured to selectively short-circuit an input terminal of a corresponding submodule for bypassing the corresponding submodule. For example, the bypass device may be implemented by a switch coupled between the positive and negative input terminals of the corresponding submodule. Accordingly, when one submodule becomes faulty, the corresponding bypass device is enabled to bypass the faulty submodule, thereby allowing the whole system to continue operating. Consequently, the system's reliability is improved.

## Claims

1. A power system (1), **characterized by** comprising:
an AC-DC conversion module (11), configured to convert an AC voltage (Vac1) to an intermediate DC voltage (Vdc1), wherein the intermediate DC voltage (Vdc1) is greater than or equal to 100 V;
a server board (12);
a DC-DC converter (13), disposed on the server board (12), electrically connected to the AC-DC conversion module (11) to receive the intermediate DC voltage (Vdc1), and configured to convert the intermediate DC voltage (Vdc1) to a load voltage (Vdc2), wherein the DC-DC converter (13) comprises a plurality of submodules (131 to 13N) and a controller (130), input terminals of the plurality of submodules (131 to 13N) are electrically connected in series, output terminals of the plurality of submodules (131 to 13N) are electrically connected in parallel, and the controller (130) is configured to control operation of the plurality of submodules (131 to 13N); and
a load (14), disposed on the server board (12), and electrically connected to the DC-DC converter (13) to receive the load voltage (Vdc2), wherein the load (14) is configured to be powered by the load voltage (Vdc2).

2. The power system (1) according to claim 1, wherein the DC-DC converter (13) is directly connected to the AC-DC conversion module (11).

3. The power system (1) according to claim 1 or 2, wherein the intermediate DC voltage (Vdc1) is greater than or equal to 400 V.

4. The power system (1) according to any of the preceding claims, wherein the intermediate DC voltage (Vdc1) is between 400 V and 1 kV.

5. The power system (1) according to any of the preceding claims, wherein the load voltage (Vdc2) is between 0.1 V and 50 V.

6. The power system (1) according to any of the preceding claims, wherein the load voltage (Vdc2) is between 0.5 V and 12 V.

7. The power system (1) according to any of the preceding claims, wherein the load voltage (Vdc2) is between 0.5 V and 1 V.

8. The power system (1) according to any of claims 1 to 6, wherein the load voltage (Vdc2) is between 1 V and 12 V.

9. The power system (1) according to any of the preceding claims, wherein a conversion ratio of the DC-DC converter (13) is greater than ten.

10. The power system (1) according to any of the preceding claims, wherein the AC voltage (Vac1) is between 1 kV and 69 kV or between 10 kV and 35 kV.

11. The power system (1) according to any of the preceding claims, wherein each of the plurality of submodules (131) comprises:
a primary circuit (21), configured to halve an input voltage (Vin) of the submodule (131);
a transformer (22), comprising a primary winding (Wp) electrically connected to the primary circuit (21); and
a secondary circuit (23), electrically connected between a secondary winding (Ws) of the transformer (22) and the load (14), and configured to receive and double a current from the transformer (22) and provide the current to the load (14),
wherein each of the plurality of submodules (131 to 13N) is configured to provide galvanic isolation from the intermediate DC voltage (Vdc1) to the load voltage (Vdc2).

12. The power system (1) according to claim 11, wherein the primary circuit (21) comprises a switch bridge arm and a capacitor bridge arm electrically connected in parallel, the switch bridge arm comprises two switches (S1, S2) electrically connected in series, a connection point of the two switches (S1, S2) is electrically connected to a first terminal of the primary winding (Wp), the capacitor bridge arm comprises two capacitors (C1, C2) electrically connected in series, and a connection point of the two capacitors (C1, C2) is electrically connected to a second terminal of the primary winding (Wp).

13. The power system (1) according to claim 12, wherein a number of the plurality of submodules (131 to 13N) is N, where N is an integer greater than one; wherein control signals of 2N switches (S1, S2, S3, S4) in primary circuits (21) of the plurality of submodules (131 to 13N) sequentially have a phase difference of 180/N, and a ripple frequency of an output current (Io) collaboratively provided by the plurality of submodules (131 to 13N) to the load (14) is 2N times a switching frequency of each of the 2N switches (S1, S2, S3, S4) in the primary circuits (21) of the plurality of submodules (131 to 13N).

14. The power system (1) according to any of claims 11 to 13, wherein the secondary circuit (23) comprises a first switch (Q1), a second switch (Q2), a first inductor (L1) and a second inductor (L2), the first switch (Q1) is electrically connected between a first terminal of the secondary winding (Ws) and a negative output terminal of the submodule (131), the second switch (Q2) is electrically connected between a second terminal of the secondary winding (Ws) and the negative output terminal, the first inductor (L1) is electrically connected between the first terminal of the secondary winding (Ws) and a positive output terminal of the submodule (131), and the second inductor (L2) is electrically connected between the second terminal of the secondary winding (Ws) and the positive output terminal.

15. The power system (1) according to any of the preceding claims, wherein the DC-DC converter (13a) further comprises a plurality of bypass devices (31 to 3N) electrically connected to the input terminals of the plurality of submodules (131 to 13N) respectively, and each of the plurality of bypass devices (31 to 3N) is controlled by the controller (130) and is configured to selectively short-circuit an input terminal of a corresponding submodule for bypassing the corresponding submodule.
